# EUROPÄISCHE PATENTSCHRIFT

(11) **EP 0 895 845 B1**
(45) Veröffentlichungstag und Bekanntmachung des Hinweises auf die Patenterteilung: **06.03.2002**
(21) Anmeldenummer: 98114952.9
(22) Anmeldetag: 08.08.1998
(51) Int. Cl.: B29C 31/04, B29C 43/34

(54) **Pressenanlage zur Herstellung von Formteilen aus Kunststoff**
Press plant for producing moulded plastic articles
Installation de pressage pour fabriquer des objets moulés en matière plastique

(30) Priorität: 08.08.1997 DE 19734473
(43) Veröffentlichungstag der Anmeldung: 10.02.1999
(73) Patentinhaber: Maschinenfabrik J. Dieffenbacher GmbH & Co., 75031 Eppingen (DE)
(72) Erfinder: Svoboda, Bruno, Ing., 1140 Wien (AT)
(74) Vertreter: Hartdegen, Anton

(56) Entgegenhaltungen:
- EP-A- 0 285 982
- EP-A- 0 743 160
- DE-A- 3 115 306
- DE-A- 3 327 135
- DE-A- 3 705 470
- DE-A- 3 843 342
- US-A- 2 834 051
- US-A- 4 925 381
- PATENT ABSTRACTS OF JAPAN vol. 011, no. 001 (M-550), 6. Januar 1987 & JP 61 181618 A (KURATA KINZOKU KOGYO KK), 14. August 1986
- PATENT ABSTRACTS OF JAPAN vol. 015, no. 151 (M-1103), 16. April 1991 & JP 03 026517 A (SHOWA DENKO KK), 5. Februar 1991

## Beschreibung

Die Erfindung betrifft eine Pressenanlage zur Herstellung von Formteilen aus Kunststoff nach dem Oberbegriff des Anspruchs 1.

Solche Pressenanlagen dienen zur Herstellung von Formteilen aus thermoplastischen oder duroplastischen Kunststoffen oder Elastomeren. Die Kunststoffe können auch faserverstärkt sein. Die Formteile können mit Folien oder Textilien verbunden sein, wobei ein Strang aus plastifizierter Kunststoffmasse zwischen die geöffneten Formenhälften einer vertikalen Presse gelegt und dann mit dem eingebrachten Dekormaterial verpreßt wird.

Die Patentschrift EP 0 333 198 B1 beschreibt ein Verfahren, bei welchem die Kunststoffmasse während des Schließvorganges in die Form eingebracht wird. Dies hat den Nachteil, daß die beim Preßvorgang zusammenfließenden Kunststoffmassen an den Zusammenfließstellen nicht homogen verbinden und es dadurch zu Schwachstellen kommt.

Bei einer bekannten Pressenanlage nach der Veröffentlichung WO 97/11829 gemäß dem Oberbegriff vorliegender Erfindung wird die Kunststoffmasse mit Hilfe eines Schneckenplastifizieraggregates plastifiziert und durch eine Spritzeinheit in das Formwerkzeug abgelegt, wobei sich die Spritzeinheit während des Plastifiziervorganges entsprechend des plastifizierten Volumens nach hinten bewegt und das plastifizierte Massevolumen im Zylinderraum vor dem Spritzkolben gespeichert wird. Anschließend fährt die Schneckenplastifiziereinheit- und Spritzeinheit zwischen die geöffneten Formhälften. Während der Rückwärtsbewegung der Schneckenplastifizier- und Spritzeinheit in ihre Ausgangsposition drückt der Spritzkolben, indem er sich im Zylinderraum nach vorne bewegt, die plastifizierte Masse durch eine Düse, wobei die Masse in Form eines Stranges in das Formwerkzeug gelegt wird. Die Düse lenkt den Massestrang um 90° nach unten ab und bringt ihn durch eine entsprechende Kanalform auf die gewünschte Austrittsbreite. Um bei kompliziert geformten Teilen den Massestrang möglichst an die Teileform anzugleichen, kann das Schneckenplastifizier- und Spritzaggregat sowohl seitlich als auch in der Höhe verfahren und die Düse möglichst genau der Formkontur folgen.
Als Nachteile dieser Pressenanlage sind anzuführen:
- Die Schneckenplastifizieraggregate können, speziell bei großen Kunststoffmassevolumen mehrere Tonnen wiegen und sind daher in der Bewegungsgeschwindigkeit eingeschränkt.
- Beim Einsatz von mehreren Aggregaten (für mehrere Teile) behindern sich die Aggregate infolge ihrer Größe.
- Bei der Verarbeitung von faserverstärkten Kunststoffen ist es oft notwendig andere Schneckenplastifizieraggregate als die derzeit zum Einspritzen eingesetzten Einschneckenaggregate zu verwenden.

Mit DE-PS 24 03 481 ist eine Vorrichtung zum Spritzgießen von Formteilen aus Kunststoff bekannt geworden, bei der zwei Spritzeinheiten um eine Achse drehbar und abwechselnd von der Extrudereinheit lösbar sind, wobei die bereits mit geschmolzenem Kunststoff gefüllte Spritzeinheit in die Formpresse zum Formpressen eingeschwenkt und die leere Spritzeinheit aus der Formpresse zum Füllen ausgeschwenkt wird. Die gefüllte Spritzeinheit dient nach dem Schließen der Formpresse auch zum Einspritzen des Kunststoffes in die Form.

Aus der EP-A 0 285 982 ist eine Pressenanlage bekannt geworden, in der die Dosiereinheit und Spritzeinheit zwei selbstständige Aggregate sind, die Spritzeinheit ist an einem Bewegungsmechanismus angeordnet und beide Aggregate sind voneinander trennbar und miteinander verbindbar, wobei eine oder mehrere Spritzeinheiten an die Dosiereinheit ab- und ankoppelbar sowie zu einer oder mehreren Formpressen verfahrbar ausgeführt sind. Die Spritzeinheit ist mit dem Bewegungsmechanismus zwischen Dosiereinheit und Formpresse verfahrbar angeordnet. In diesem Stand der Technik ist kein Weg aufgezeigt, wie die oben angeführten Nachteile zu beheben sind.

Der Erfindung liegt die Aufgabe zugrunde, eine Pressenanlage zu schaffen, bei der die angeführten Nachteile vermieden werden bzw. nicht auftreten, bei der nur kleine Aggregate innerhalb der Anlage bewegt werden müssen sowie die die Kunststoffmasse ablegende klein und leicht bauende Einheit in drei Achsen zwischen den Formwerkzeughälften verfahren werden kann.

Diese Aufgabe wird erfindungsgemäß durch die Merkmale des Patentanspruches 1 gelöst.

Gemäß der Erfindung wird die Extruder- und Plastifiziereinheit von der Spritzeinheit getrennt. Dadurch können mit einer Extrudereinheit zwei oder mehr Spritzeinheiten gefüllt werden. Dazu wird die Extrudereinheit mechanisch an die Spritzeinheiten angekoppelt. Die Spritzeinheiten, die dann nur noch aus dem Spritzkolben und der Ablegedüse bestehen, können kleiner und beweglicher gebaut werden und erlauben auch das Abfahren komplizierterer Konturen als bisher.

Die erfindungsgemäße Pressenanlage zeichnet sich dadurch aus, daß nur die wesentlich kleinere Masse der Spritzeinheit für die Ablage des Massestranges innerhalb des Formwerkzeuges bewegt werden muß und somit die Möglichkeit bei geringerem Energieaufwand für eine schnellere Bewegung der Spritzeinheit besteht.

Ein weiterer Vorteil besteht darin, daß durch den geringen Platzbedarf der Spritzeinheit auch wesentlich kleinere Preßteile hergestellt werden können. Da die Plastifiziereinheit feststehend aufgebaut werden kann ist es weiter vorteilhaft, sie in jeder beliebigen Lage und in dem für die jeweils zu verarbeitenden Kunststoffe optimalen Bauweise auszuführen.

Anhand der Zeichnung werden weitere zweckmäßige Ausgestaltungen der Erfindung näher beschrieben, die auch in den Unteransprüchen angegeben sind.

Es zeigen:
- Figur 1: die erfindungsgemäße Pressenanlage in Seitenansicht,
- Figur 2: die Pressenanlage nach Figur 1 in getrennter Anordnung, mit der Plastifiziereinheit fest am Koordinatentisch und der Spritzeinheit beim Ablegevorgang in der Presse,
- Figur 3: die Pressenanlage in Draufsicht nach Figur 1,
- Figur 4: die Pressenanlage mit Vorextruder und die Spritzeinheit als Plastifizierund Spritzeinheit ausgebildet,
- Figur 5: die Pressenanlage in einer Draufsicht mit zwei Spritzeinheiten und
- Figur 6: die Pressenanlage in Seitenansicht mit zwei Schmelzeleitungen und
- Figur 7: die Pressenanlage nach Figur 6 in Draufsicht.

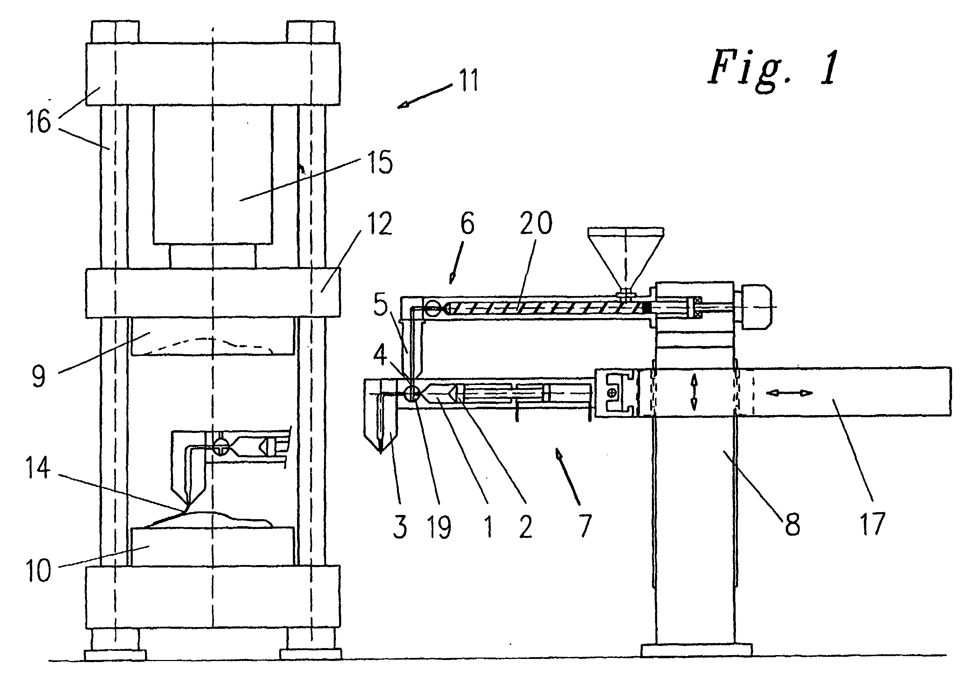

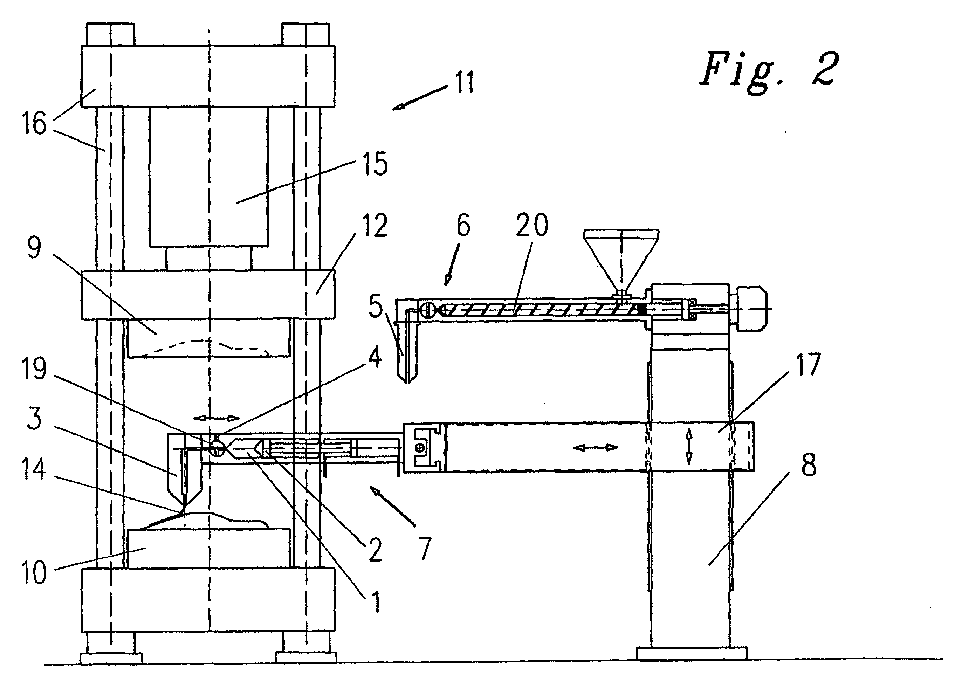

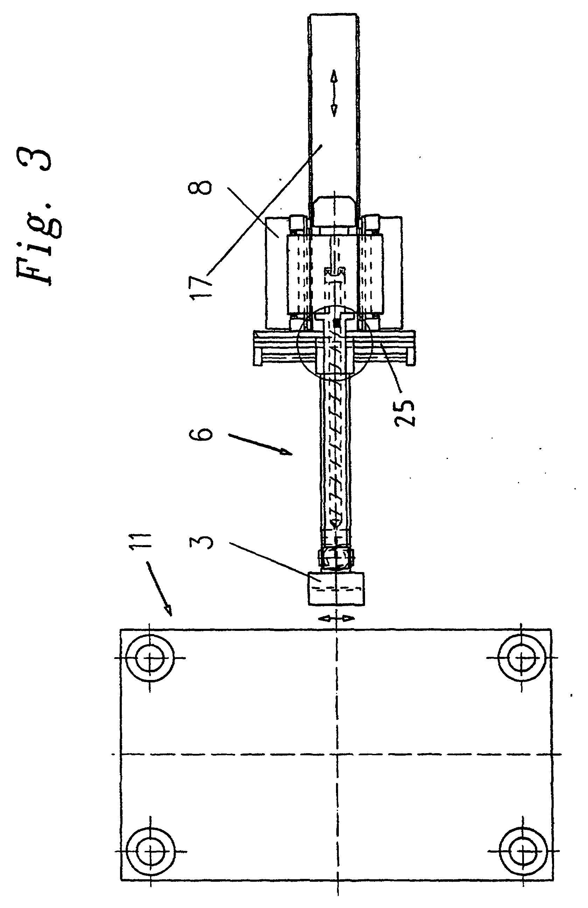

Die Pressenanlage nach der Erfindung besteht nach den Figuren 1 bis 5 in ihren Hauptteilen aus der Formpresse 11, dem Koordinatentisch 8 mit der daran fest installierten Extruder- oder Plastifiziereinheit 6 und der Spritzeinheit 7, die mittels einer Führungsschiene 17 in drei Achsen verfahrbar sowie durch Absenken von der Plastifiziereinheit 6 abkuppelbar ausgeführt ist. Die Formpresse 11 besteht aus dem Pressenrahmen 16, dem Preßzylinder 15 und der das Formwerkzeug 9 und 10 öffnenden und schließenden Formschließeinrichtung 12. Das Formwerkzeug besteht aus der beweglichen Matrize 9 und der stationären Patrize 10. Ein zylindrischer Speicherraum 1 der Spritzeinheit 7 ist auf der einen Seite von einem in diesem axial verschiebbar angeordneten, angetriebenen Spritzkolben 2 und auf der anderen Seite durch eine Ablegedüse 3 begrenzt. In dem Speicherraum 1 wird durch eine Öffnung 4 mit Hilfe eines fest stehenden und mit seinem Mundstück 5 an diese Öffnung 4 angekoppelten Extruder 6 oder Schneckenplastifizieraggregat die Kunststoffmasse durch die Plastifzierschnecke 20 eingebracht, wobei sich der Spritzkolben 2 entsprechend des eingebrachten Volumens nach hinten bewegt. Ist das erforderliche Massevolumen erreicht, koppelt die Spritzeinheit 7 vom Mundstück 5 des Extruders 6 ab und fährt mit Hilfe einer am Koordinatentisch 8 angebrachten, längsverfahrbaren sowie heb- und senkbaren Führungsschiene 17 zwischen die geöffnete Formpresse 11. Während der Rückwärtsbewegung stößt der angetriebene Spritzkolben 2 die Kunststoffmasse aus dem Speicherraum 1 durch die Ablegedüse 3 aus, wobei ein Massestrang 14 auf die untere stationäre Patrize 10 abgelegt wird. Danach koppelt die Spritzeinheit 7 über ein Zweiwegeventil 19 wieder an den Extruder 6 an und der Vorgang wiederholt sich. Wie in den Figuren 3, 4, und 5 dargestellt, ist die Spritzeinheit 7 auch auf einer an der Führungsschiene 17 angebrachten Querfahrtschiene 25 waagrecht verfahrbar angebracht.

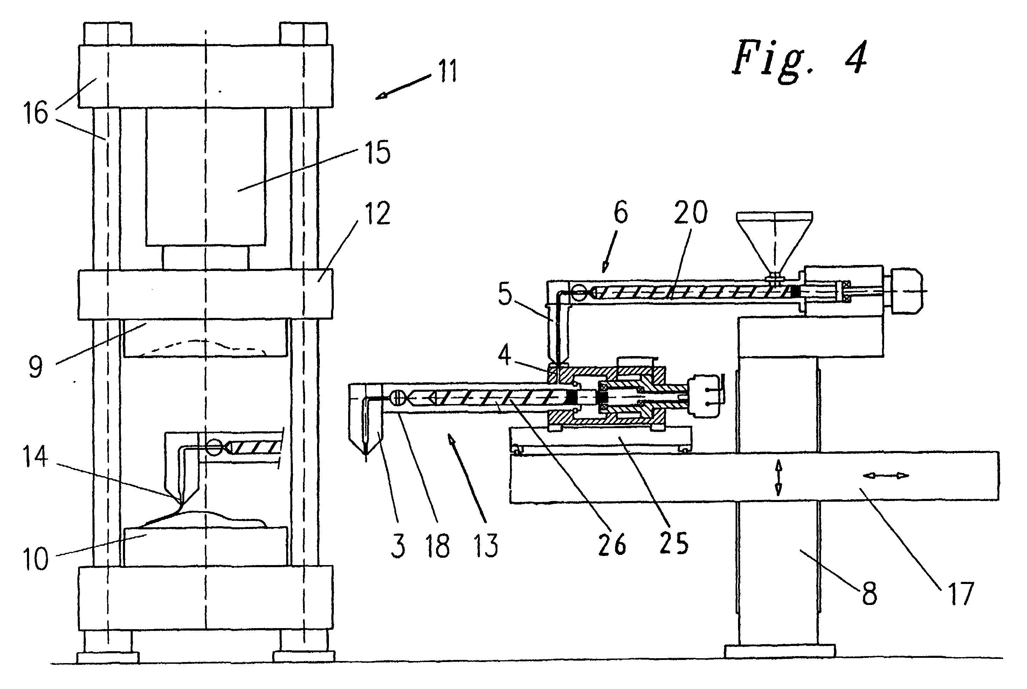

Für Großanlagen kann es zweckmäßig sein, daß mehrere Extruder 6 feststehend, schwenkbar oder verschiebbar am Koordinatentisch 8 vorgesehen sind, die zwischen einer oder mehreren Formpressen 11 verfahrbar angeordnet sind. Um den Massestrang 14 mit ausreichender Wärme in das Formwerkzeug 9 und 10 einbringen zu können, wird in einer weiteren zweckmäßigen Ausgestaltung nach Figur 4 die Spritzeinheit als beheizbare und dem Massestrang 14 ausstoßbare Plastifizier- und Spritzeinheit 13 mit Ausstoß-Plastifizierschnecke 26 und Plastifizierzylinder 18 ausgeführt.

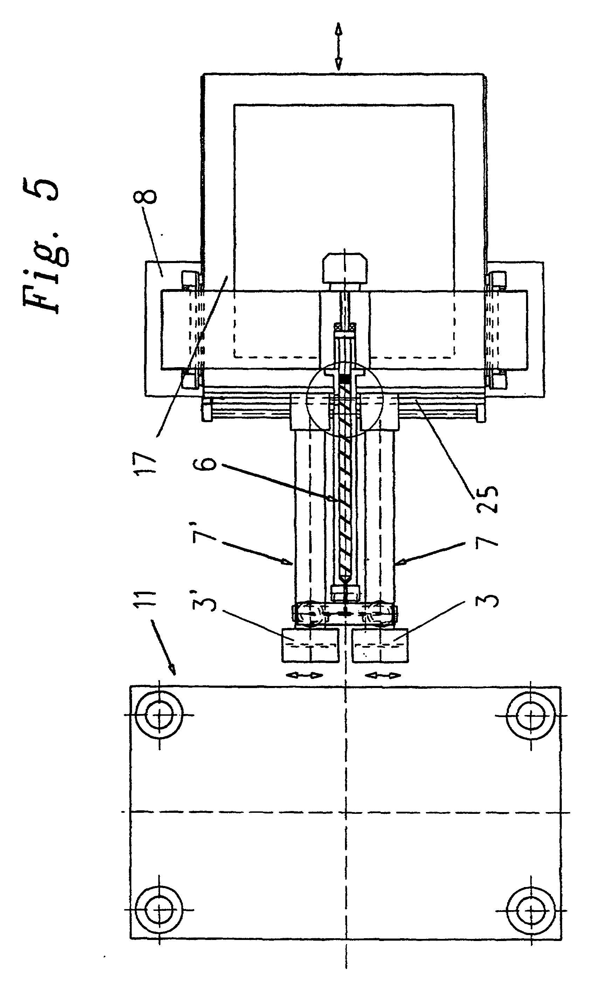

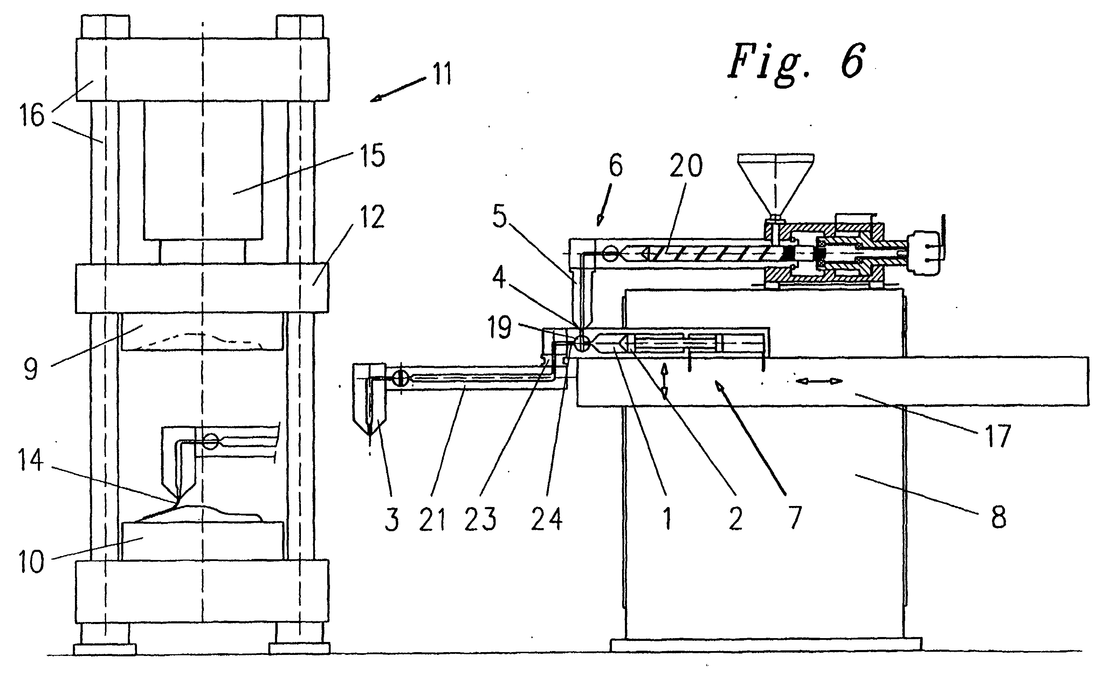

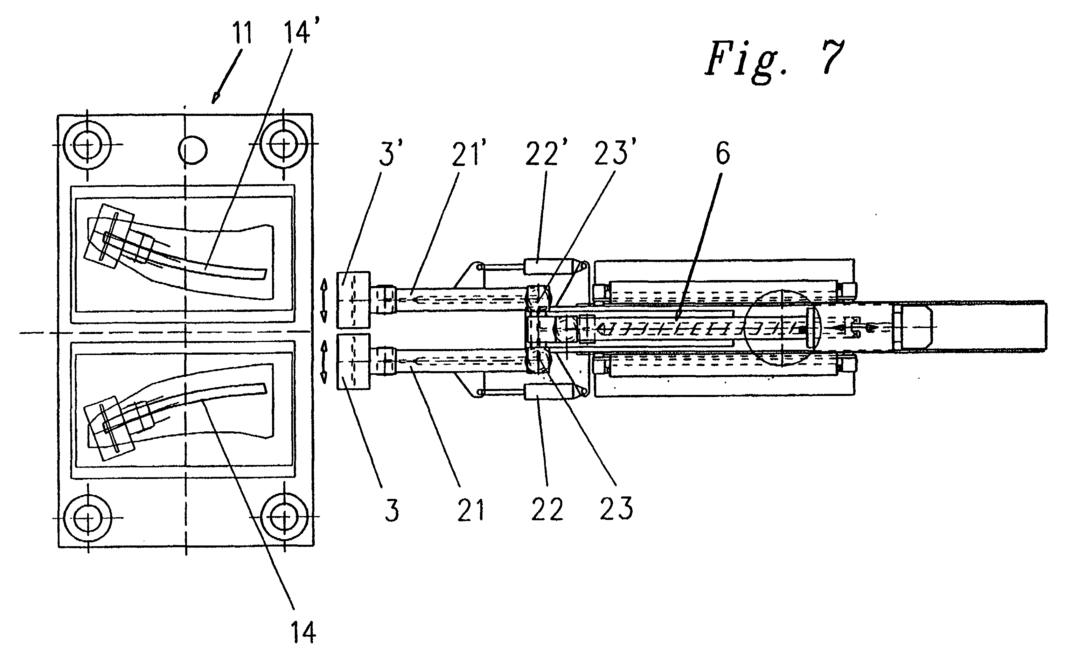

Bei der Erzeugung von mehreren Teilen in einem Arbeitsgang sind nach den Figuren 5 bis 7 zwei Spritzaggregate 7 und 7'vorgesehen, welche auf dem Koordinatentisch 8 angeordnet sind und synchron zwischen die geöffneten Formhälften einfahren. Die Figuren 6 und 7 zeigen eine Ausführung, bei welcher eine Spritzeinheit 7 nur auf der Führungsschiene 17 in einer Richtung verfährt und zwei Massestränge 14 zur Herstellung von zwei Formteilen in einer gekrümmten Bahn auf der Patrize 10 abgelegt werden. Bei dieser Ausführung sind mit der Austrittsöffnung 24 der Spritzeinheit 7 mindestens eine, vorteilhaft zwei Schmelzeleitungen 21 und 21' gelenkig verbunden, an deren Enden Masseaustragsdüsen 3 angeordnet sind. Die beiden Schmelzeleitungen 21 sind mit Hilfe je eines Antriebselementes 22 und 22' um ein Drehgelenk 23 schwenkbar. Somit ist es möglich, bei einer Linearbewegung des Spritzaggregates 7 und gleichzeitiger Schwenkbewegung der beiden Schmelzeleitungen 21 und 21' zwei Massestränge 14 und 14' in einer gekrümmten Bahn auf einer oder mehreren Patrizen 10 abzulegen.

### Bezugszeichenliste

- 1.: zylindrischer Speicherraum
- 2.: Spritzkolben
- 3.: Ablegedüse (Masseaustragdüse)
- 4.: Öffnung
- 5.: Mundstück
- 6.: Extruder oder Plastifiziereinheit
- 7.: Spritzeinheit
- 8.: Koordinatentisch
- 9.: obere Formhälfte, Matrize
- 10.: untere Formhälfte, Patrize
- 11.: Formpresse
- 12.: Formschließeinrichtung
- 13.: Plastifizier- und Spritzeinheit
- 14.: Massestrang
- 15.: Preßzylinder
- 16.: Pressenrahmen
- 17.: Führungsschiene
- 18.: Plastifizierzylinder
- 19.: Zweiwegeventil
- 20.: Plastifizierschnecke
- 21.: Schmelzeleitung
- 22.: Antriebselement
- 23.: Drehgelenk
- 24.: Austrittsöffnung
- 25.: Querfahrtschiene
- 26.: Ausstoß-Plastifizierschnecke

## Patentansprüche

1. Pressenanlage zur Herstellung von Formteilen aus Kunststoff, bei der die Kunststoffmasse in einer Extrudereinheit (6) plastifiziert und von einer Spritzeinheit (7) in das aus Matrize (9) und Patrize (10) bestehende Formwerkzeug einer Formpresse (11) einbringbar ist, bei der die Extrudereinheit (6) und die Spritzeinheit (7) aus zwei selbständigen, voneinander trennbaren und miteinander verbindbaren Aggregaten bestehen, und die Spritzeinheit (7) am Koordinatentisch (8) heb- und senkbar, längsverfahrbar sowie schwenkbar angebracht ist, wobei eine oder mehrere Spritzeinheiten (7) an die Extrudereinheit (6) ab- und ankoppelbar sowie zu einer oder mehreren Formpressen (11) verfahrbar ausgeführt sind,
**dadurch gekennzeichnet, daß**
die Extrudereinheit (6) und die Spritzeinheit (7) an einem gemeinsamen Koordinatentisch angeordnet sind, wobei die Spritzeinheit (7) mit einer Führungsschiene (17) zwischen Extruder (6) bzw. Koordinatentisch (8) und Formpresse (11) verfahrbar angeordnet ist.

2. Pressenanlage nach Anspruch 1,
**dadurch gekennzeichnet, daß** die Spritzeinheit (7 und 7') aus einem zylindrischen Speicherraum (1) besteht, der auf der einen Seite von einem axial verschiebbaren, angetriebenen Spritzkolben (2) und auf der anderen Seite durch eine Ablegedüse (3) begrenzt ist.

3. Pressenanlage nach den Ansprüchen 1 und 2,
**dadurch gekennzeichnet, daß** der Speicherraum (1) der Spritzeinheit (7) über eine mit einem Zweiwegeventil (19) ausgebildete Öffnung (4) mit einem Mundstück (5) des Extruders (6) ankuppelbar ausgebildet ist.

4. Pressenanlage nach den Ansprüchen 1 bis 3,
**dadurch gekennzeichnet, daß** der Extruder (6) feststehend am Koordinatentisch (8) fixiert ist.

5. Pressenanlage nach den Ansprüchen 1 bis 4,
**dadurch gekennzeichnet, daß** mehrere Extrudereinheiten (6) vorgesehen sind.

6. Pressenanlage nach den Ansprüchen 1 bis 5,
**dadurch gekennzeichnet, daß** zwei Spritzeinheiten (7 und 7') über eine an der Führungsschiene (17) angebrachte Querfahrtschiene (25) von- und zueinander waagrecht bewegbar sowie an der Querfahrtschiene feststellbar angeordnet sind.

7. Pressenanlage nach den Ansprüchen 1 bis 6,
**dadurch gekennzeichnet, daß** mehrere Spritzeinheiten (7 und 7') von ein oder zwei Extrudern (6) beschickbar und daran an- und abkoppelbar ausgebildet sind.

8. Pressenanlage nach den Ansprüchen 1 bis 7,
**dadurch gekennzeichnet, daß** die Spritzeinheit als Plastifizier- und Spritzeinheit (13) mit den Massestrang (14) ausgebender Ausstoß-Plastifizierschnecke (26) ausgebildet ist.

9. Pressenanlage nach den Ansprüchen 1 bis 3,
**dadurch gekennzeichnet, daß** auch der Extruder (6) schwenkbar und/oder verschiebbar am Koordinatentisch (8) angeordnet und zwischen einer oder mehreren Formpresse (11) verfahrbar angeordnet ist.

10. Pressenanlage nach den Ansprüchen 1 bis 9,
**dadurch gekennzeichnet, daß** die Spritzeinheit (7) mitzwei Austrittsöffnungen (24) über Drehgelenke (23) mit zwei Schmelzeleitungen (21 und 21') verbunden ist, und jede Schmelzeleitung (21 und 21') mit Hilfe eines Antriebselementes (22) um die Mittelachse je eines Drehgelenkes (23 und 23') schwenkbar ist.

11. Pressenanlage nach Anspruch 10,
**dadurch gekennzeichnet, daß** die Austrittsöffnungen (24 und 24') der Schmelzeleitungen (21 und 21') heb- und senkbar sind.

## Claims

1. A compression molding installation for the production of molded parts from plastic, in which the plastic mass is plasticized in an extruder unit (6) and can be introduced by an injection unit (7) into the mold of a compression molding unit (11), which mold consists of a female mold (9) and a male mold (10), in which the extruder unit (6) and the injection unit (7) consist of two independent, mutually separable and mutually connectable units, and the injection unit (7) is attached to the coordinate table (8) in a manner so as to be lowerable and liftable, longitudinally displaceable and swivelable, with one or several injection units (7) being designed so as to allow coupling to or uncoupling from extruder unit (7) and to be displaceable with respect to one or several compression molding units (11), **characterized in that** the extruder unit (6) and the injection unit (7) are arranged on a common coordinate table, with the injection unit (7) being arranged in a displaceable manner with a guide rail (17) between the extruder (6) or coordinate table (8) and the compression molding unit (11).

2. A compression molding installation as claimed in claim 1, **characterized in that** the injection unit (7 and 7') consists of a cylindrical storage chamber (1) which is delimited on the one side by an axially displaceable, driven injection plunger (2) and on the other side by a deposition nozzle (3).

3. A compression molding installation as claimed in claims 1 and 2, **characterized in that** the storage chamber (1) of the injection unit (7) is arranged in such a manner that it can be coupled to a die (5) of the extruder (6) via an orifice (4) which is arranged with a two-way valve (19).

4. A compression molding installation as claimed in claims 1 to 3, **characterized in that** the extruder (6) is fixedly attached to the coordinate table (8).

5. A compression molding installation as claimed in claims 1 to 4, **characterized in that** several extruder units (6) are provided.

6. A compression molding installation as claimed in claims 1 to 5, **characterized in that** two injection units (7 and 7') are arranged in such a manner that they can be moved horizontally away from and toward one another over a transverse rail (25) which is arranged on the guide rail (17) and can be fixed to said transverse rail.

7. A compression molding installation as claimed in claims 1 to 6, **characterized in that** several injection units (7 and 7') are arranged in such a manner that they can be charged by one or two extruders (6) and can be coupled to and uncoupled from the same.

8. A compression molding installation as claimed in claims 1 to 7, **characterized in that** the injection unit is arranged as a plasticizing and injection unit (13) with an ejection/plasticizing screw (26) which delivers the material strand (14).

9. A compression molding installation as claimed in claims 1 to 3, **characterized in that** the extruder (6) is also arranged swivelably and/or displaceably on the coordinate table (8) and is displaceably arranged between one or several compression molding units (11).

10. A compression molding installation as claimed in claims 1 to 9, **characterized in that** the injection unit (7) with two die openings (24) is connected via pivot joints (23) to two melt lines (21 and 21') and each melt line (21 and 21') is swivelable with the help of a drive element (22) about the central axis of a pivot joint (23 and 23') each.

11. A compression molding installation as claimed in claim 10, **characterized in that** the die openings (24 and 24') of the melt lines (21 and 21') can be lifted or lowered.

## Revendications

1. Installation de presse pour la production de pièces moulées en plastique, dans laquelle la masse de plastique est plastifiée dans une unité d'extrudeuse (6) et peut être introduite par une unité d'injection (7) dans l'outil de formage d'une presse de formage (11) composé d'une matrice (9) et d'un poinçon (10), dans laquelle l'unité d'extrudeuse (6) et l'unité d'injection (7) se composent de deux groupes autonomes, pouvant être séparés l'un de l'autre et assemblés l'un à l'autre et l'unité d'injection (7) peut être levée et abaissée au niveau du plateau à coordonnées (8), déplacée longitudinalement et pivoter, une ou plusieurs unités d'injection (7) pouvant être séparées de l'unité d'extrudeuse (6) et couplées à celle-ci et pouvant être déplacées vers une ou plusieurs presses de formage (11), **caractérisée en ce que** l'unité d'extrudeuse (6) et l'unité d'injection (7) sont disposées sur un plateau à coordonnées commun, l'unité d'injection (7) pouvant être déplacée sur un rail de guidage (17) entre l'extrudeuse (6) ou le plateau à coordonnées (8) et la presse de formage (11).

2. Installation de presse selon la revendication 1, **caractérisée en ce que** l'unité d'injection (7 et 7') se compose d'un espace formant réservoir (1) cylindrique délimité sur un côté par un piston d'injection (2) entraîné et mobile dans le sens axial et de l'autre côté par une buse de distribution (3).

3. Installation de presse selon les revendications 1 et 2, **caractérisée en ce que** l'espace formant réservoir (1) de l'unité d'injection (7) peut être couplé par une ouverture (4) dotée d'un robinet à deux voies (19) à une embouchure (5) de l'extrudeuse (6).

4. Installation de presse selon les revendications 1 à 3, **caractérisée en ce que** l'extrudeuse (6) est fixée à demeure sur le plateau à coordonnées (8).

5. Installation de presse selon les revendications 1 à 4, **caractérisée en ce qu'**il est prévu plusieurs unités d'extrudeuse (6).

6. Installation de presse selon les revendications 1 à 5, **caractérisée en ce que** deux unités d'injection (7 et 7') sont disposées de manière mobile à l'horizontale pour se rapprocher ou s'éloigner l'une de l'autre sur un rail de déplacement transversal (25) disposé sur le rail de guidage (17) et peuvent être immobilisées sur le rail de déplacement transversal.

7. Installation de presse selon les revendications 1 à 6, **caractérisée en ce que** plusieurs unités d'injection (7 et 7') peuvent être chargées par une ou plusieurs extrudeuses (6) et couplées à celles-ci ou découplées.

8. Installation de presse selon les revendications 1 à 7, **caractérisée en ce que** l'unité d'injection est conçue comme une unité de plastification et d'injection (13) avec une vis de plastification et d'éjection (26) délivrant le cordon de matière (14).

9. Installation de presse selon les revendications 1 à 3, **caractérisée en ce que** l'extrudeuse (6) est elle aussi disposée de manière à pouvoir pivoter et/ou se déplacer sur le plateau à coordonnées (8) et peut se déplacer entre une ou plusieurs presses de formage (11).

10. Installation de presse selon les revendications 1 à 9, **caractérisée en ce que** l'unité d'injection (7) est reliée par deux ouvertures de sortie (24), par l'intermédiaire d'articulations à charnière (23), à deux conduites de matière fondue (21 et 21'), et chaque conduite de matière fondue (21 et 21') peut pivoter à l'aide d'un élément d'entraînement (22) autour de l'axe médian d'une articulation à charnière (23 et 23') correspondante.

11. Installation de presse selon la revendication 10, **caractérisée en ce que** les ouvertures de sortie (24 et 24') des conduites de matière fondue (21 et 21') peuvent être relevées et abaissées.
